# EUROPÄISCHE PATENTSCHRIFT

(11) **EP 1 254 714 B1**
(45) Veröffentlichungstag und Bekanntmachung des Hinweises auf die Patenterteilung: **29.06.2005**
(21) Anmeldenummer: 02008259.0
(22) Anmeldetag: 19.04.2002
(51) Int. Cl.: B01J 27/26, B01J 31/06, C08G 65/26

(54) **Doppelmetallcyanid-Katalysatoren für die Herstellung von Polyetherpolyolen**
Double metal cyanide catalyst for the production of polyetherpolyols
Catalyseur à base de cyanure métallique double pour la production de polyétherpolyols

(30) Priorität: 02.05.2001 DE 10121312
(43) Veröffentlichungstag der Anmeldung: 06.11.2002
(73) Patentinhaber: Bayer MaterialScience AG, 51368 Leverkusen (DE)
(72) Erfinder: Hofmann, Jörg, Dr., 47829 Krefeld (DE); Ooms, Pieter, Dr., 47800 Krefeld (DE); Schäfer, Walter, Dr., 42799 Leichlingen (DE)

(56) Entgegenhaltungen:
- WO-A-01/34297
- WO-A-97/40086
- DE-A- 19 905 611

## Beschreibung

Die Erfindung betrifft neue Doppelmetallcyanid (DMC)-Katalysatoren für die Herstellung von Polyetherpolyolen durch Polyaddition von Alkylenoxiden an aktive Wasserstoffatome aufweisende Starterverbindungen.

Doppelmetallcyanid (DMC)-Katalysatoren für die Polyaddition von Alkylenoxiden an aktive Wasserstoffatome aufweisende Starterverbindungen sind bekannt (siehe z.B. US-A 3 404 109, US-A 3 829 505, US-A 3 941 849 und US-A 5 158 922). Der Einsatz dieser DMC-Katalysatoren für die Herstellung von Polyetherpolyolen bewirkt insbesondere eine Reduzierung des Anteils an monofunktionellen Polyethern mit endständigen Doppelbindungen, sogenannten Monoolen, im Vergleich zu der konventionellen Herstellung von Polyetherpolyolen mittels Alkali-Katalysatoren, wie Alkalihydroxiden. Die so erhaltenen Polyetherpolyole können zu hochwertigen Polyurethanen (z.B. Elastomere, Schäume, Beschichtungen) verarbeitet werden. DMC-Katalysatoren werden gewöhnlich erhalten, indem man eine wässrige Lösung eines Metallsalzes mit der wässrigen Lösung eines Metallcyanidsalzes in Gegenwart eines organischen Komplexliganden, z.B. eines Ethers, umsetzt. In einer typischen Katalysatorpräparation werden beispielsweise wässrige Lösungen von Zinkchlorid (im Überschuss) und Kaliumhexacyanocobaltat gemischt und anschließend Dimethoxyethan (Glyme) zur gebildeten Suspension gegeben. Nach Filtration und Waschen des Katalysators mit wässriger Glyme-Lösung wird ein aktiver Katalysator der allgemeinen Formel

Zn₃[Co(CN)₆]₂ x ZnCl₂ yH₂O z Glyme

erhalten (siehe z.B. EP-A 700 949).

Aus JP-A 4 145 123, US-A 5 470 813, EP-A 700 949, EP-A 743 093, EP-A 761 708 und WO 97/40086 sind DMC-Katalysatoren bekannt, die durch Einsatz von tert.-Butanol als organischem Komplexliganden (allein oder in Kombination mit einem Polyether (EP-A 700 949, EP-A 761 708, WO 97/40086)) den Anteil an monofunktionellen Polyethern mit endständigen Doppelbindungen bei der Herstellung von Polyetherpolyolen weiter reduzieren. Darüber hinaus wird durch den Einsatz dieser DMC-Katalysatoren die Induktionszeit bei der Polyadditionsreaktion der Alkylenoxide mit entsprechenden Starterverbindungen reduziert und die Katalysatoraktivität erhöht.

Aufgabe der vorliegenden Erfindung war es, weiter verbesserte DMC-Katalysatoren für die Polyaddition von Alkylenoxiden an entsprechende Starterverbindungen zur Verfügung zu stellen, die eine im Hinblick auf die bislang bekannten Katalysatortypen erhöhte Katalysatoraktivität aufweisen. Dies führt durch Verkürzung der Alkoxylierungszeiten zu einer verbesserten Wirtschaftlichkeit des Herstellprozesses von Polyetherpolyolen. Idealerweise kann durch die erhöhte Aktivität der Katalysator dann in so geringen Konzentrationen (25 ppm oder weniger) eingesetzt werden, dass die sehr aufwendige Katalysatorabtrennung aus dem Produkt nicht mehr notwendig ist, und das Produkt direkt zur Polyurethan-Herstellung verwendet werden kann.

Überraschend wurde jetzt gefunden, dass DMC-Katalysatoren, die komplexbildende Komponenten sowohl aus der Verbindungsklasse der Polyether wie auch der Verbindungsklasse der Gallensäuren, Gallensäuresalze, Gallensäureester und Gallensäureamide enthalten, bei der Polyetherpolyol-Herstellung stark erhöhte Aktivität besitzen in Vergleich mit Katalysatoren, die nur eine komplexbildende Komponente enthalten.

Gegenstand der vorliegenden Erfindung ist daher ein Doppelmetallcyanid (DMC)-Katalysator, enthaltend
a) eine oder mehrere, vorzugsweise eine Doppelmetallcyanid-Verbindung(en),
b) einen oder mehrere, vorzugsweise einen, organischen Komplexliganden, der (die) weder ein Polyether noch eine Gallensäure, ein Gallensäuresalz, Gallensäureester oder Gallensäureamid ist (sind), und
c) eine oder mehrere, vorzugsweise eine, komplexbildende Komponente(n) aus der Verbindungsklasse der Polyether, Polyole mit -OH Funktionalitöten von 1 bis 8, und
d) eine oder mehrere, vorzugsweise eine, komplexbildende Komponente(n) aus der Verbindungsklasse der Gallensäuren, Gallensäuresalze, Gallensäureester und Gallensäureamide.

In dem erfindungsgemäßen Katalysator können gegebenenfalls e) Wasser, vorzugsweise 1 bis 10 Gew.-% und/oder f) eines oder mehrere wasserlösliche Metallsalze, vorzugsweise 5 bis 25 Gew.-%, der Formel (I) M(X)ₙ aus der Herstellung der Doppelmetallcyanidverbindungen a) enthalten sein. In Formel (I) wird M ausgewählt aus den Metallen Zn (II), Fe (II), Ni (II), Mn (II), Co (II), Sn (II), Pb (II), Fe (III), Mo (IV), Mo (VI), Al (III), V (V), V (IV), Sr (II), W (IV), W (VI), Cu (II) und Cr (III). Besonders bevorzugt sind Zn (II), Fe (II), Co (II) und Ni (II). X sind gleich oder verschieden, vorzugsweise gleich und ein Anion, bevorzugt ausgewählt aus der Gruppe der Halogenide, Hydroxide, Sulfate, Carbonate, Cyanate, Thiocyanate, Isocyanate, Isothiocyanate, Carboxylate, Oxalate oder Nitrate. Der Wert für n ist 1, 2 oder 3.

Die in den erfindungsgemäßen Katalysatoren enthaltenen Doppelmetallcyanid-Verbindungen a) sind die Reaktionsprodukte wasserlöslicher Metallsalze und wasserlöslicher Metallcyanidsalze.

Zur Herstellung von Doppelmetallcyanid-Verbindungen a) geeignete wasserlösliche Metallsalze besitzen bevorzugt die allgemeine Formel (I) M(X)ₙ, wobei M ausgewählt wird aus den Metallen Zn (II), Fe (II), Ni (II), Mn (II), Co (II), Sn (II), Pb (II), Fe (III), Mo (IV), Mo (VI), Al (III), V (V), V (IV), Sr (II), W (IV), W (VI), Cu (II) und Cr (III). Besonders bevorzugt sind Zn (II), Fe (II), Co (II) und Ni (II). Die Anionen X sind gleich oder verschieden, vorzugsweise gleich und werden bevorzugt ausgewählt aus der Gruppe der Halogenide, Hydroxide, Sulfate, Carbonate, Cyanate, Thiocyanate, Isocyanate, Isothiocyanate, Carboxylate, Oxalate oder Nitrate. Der Wert für n ist 1, 2 oder 3.

Beispiele geeigneter wasserlöslicher Metallsalze sind Zinkchlorid, Zinkbromid, Zinkacetat, Zinkacetylacetonat, Zinkbenzoat, Zinknitrat, Eisen(II)sulfat, Eisen(II)-bromid, Eisen(II)chlorid, Cobalt(II)chlorid, Cobalt(II)thiocyanat, Nickel(II)chlorid und Nickel(II)nitrat. Es können auch Mischungen verschiedener wasserlöslicher Metallsalze eingesetzt werden.

Zur Herstellung von Doppelmetallcyanid-Verbindungen a) geeignete wasserlösliche Metallcyanidsalze besitzen bevorzugt die allgemeine Formel (II) (Y)ₐ M'(CN)_{b} (A)_{c}, wobei M' ausgewählt wird aus den Metallen Fe(II), Fe(III), Co(II), Co(III), Cr(II), Cr(III), Mn(II), Mn(III), Ir(III), Ni(II), Rh(III), Ru(II), V(IV) und V(V). Besonders bevorzugt wird M' ausgewählt aus den Metallen Co(II), Co(III), Fe(II), Fe(III), Cr(III), Ir(III) und Ni(II). Das wasserlösliche Metallcyanidsalz kann eines oder mehrere dieser Metalle enthalten. Die Kationen Y sind gleich oder verschieden, vorzugsweise gleich, und werden ausgewählt aus der Alkalimetallionen und Erdalkalimetallionen umfassenden Gruppe. Die Anionen A sind gleich oder verschieden, vorzugsweise gleich, und werden ausgewählt aus der Gruppe der Halogenide, Hydroxide, Sulfate, Carbonate, Cyanate, Thiocyanate, Isocyanate, Isothiocyanate, Carboxylate, Oxalate oder Nitrate. Sowohl a als auch b und c sind ganzzahlig, wobei die Werte für a, b und c so gewählt sind, dass die Elektroneutralität des Metallcyanidsalzes gegeben ist; a ist vorzugsweise 1, 2, 3 oder 4; b ist vorzugsweise 4, 5 oder 6; c besitzt bevorzugt den Wert 0. Beispiele geeigneter wasserlöslicher Metallcyanidsalze sind Kaliumhexacyanocobaltat(III), Kaliumhexacyanoferrat(II), Kaliumhexacyanoferrat(III), Calciumhexacyanocobaltat(III) und Lithiumhexacyanocobaltat(III).

Bevorzugte Doppelmetallcyanid-Verbindungen a), die in den erfindungsgemäßen Katalysatoren enthalten sind, sind Verbindungen der allgemeinen Formel (III)

Mₓ[M'ₓ,(CN)_{y}]_{z},

worin M wie in Formel (I) und
M' wie in Formel (II) definiert ist, und
x, x', y und z ganzzahlig und so gewählt sind, dass die Elektroneutralität der Doppelmetallcyanidverbindung gegeben ist.

Vorzugsweise ist
x = 3, x' = 1, y = 6 und z = 2,
M = Zn(II), Fe(II), Co(II) oder Ni(II) und
M' = Co(III), Fe(III), Cr(III) oder Ir(III).

Beispiele geeigneter Doppelmetallcyanidverbindungen a) sind Zinkhexacyanocobaltat(III), Zinkhexacyanoiridat(III), Zinkhexacyanoferrat(III) und Cobalt(II)hexacyanocobaltat(III). Weitere Beispiele geeigneter Doppelmetallcyanid-Verbindungen sind z.B. US-A 5 158 922 zu entnehmen. Besonders bevorzugt verwendet wird Zinkhexacyanocobaltat(III).

Die in den erfindungsgemäßen DMC-Katalysatoren enthaltenen organischen Komplexliganden b) sind im Prinzip bekannt und ausführlich im Stand der Technik beschrieben (beispielsweise in US-A 5 158 922, US-A 3 404 109, US-A 3 829 505, US-A 3 941 849, EP-A 700 949, EP-A 761 708, JP-A 4 145 123, US-A 5 470 813, EP-A 743 093 und WO 97/40086). Bevorzugte organische Komplexliganden sind wasserlösliche, organische Verbindungen mit Heteroatomen, wie Sauerstoff, Stickstoff, Phosphor oder Schwefel, die mit der Doppelmetallcyanid-Verbindung a) Komplexe bilden können. Geeignete organische Komplexliganden sind z.B. Alkohole, Aldehyde, Ketone, Ether, Ester, Amide, Harnstoffe, Nitrile, Sulfide und deren Mischungen. Bevorzugte organische Komplexliganden sind wasserlösliche aliphatische Alkohole, wie Ethanol, Isopropanol, n-Butanol, iso-Butanol, sek.-Butanol und tert.-Butanol. Besonders bevorzugt ist tert.-Butanol.

Der organische Komplexligand wird entweder während der Katalysatorpräparation zugegeben oder unmittelbar nach der Ausfällung der Doppelmetallcyanidverbindung a). Gewöhnlich wird der organische Komplexligand im Überschuß eingesetzt.

Die erfindungsgemäßen DMC-Katalysatoren enthalten die Doppelmetallcyanid-Verbindungen a) in Mengen von 20 bis 90 Gew.-%, bevorzugt 25 bis 80 Gew.-%, bezogen auf die Menge des fertigen Katalysators, und die organischen Komplexliganden b) in Mengen von 0,5 bis 30 Gew.-%, bevorzugt 1 bis 25 Gew.-%, bezogen auf die Menge des fertigen Katalysators. Die erfindungsgemäßen DMC-Katalysatoren enthalten üblicherweise 1 bis 80 Gew.-%, bevorzugt 1 bis 40 Gew.-%, bezogen auf die Menge des fertigen Katalysators, einer Mischung der komplexbildenden Komponenten c) und d).

Für die Herstellung der erfindungsgemäßen Katalysatoren geeignete komplexbildende Komponenten c) sind Verbindungen aus der Klasse der Polyether.

Für die Herstellung der erfindungsgemäßen Katalysatoren geeignete Polyether sind im Prinzip bekannt und ausführlich beschrieben in EP-A 700 949, EP-A 761 708 und WO 97/40086. Die eingesetzte Polyether sind Polyetherpolyole mit Hydroxyfunktionalitäten von 1 bis 8, besonders bevorzugt von 1 bis 3, und zahlenmittleren Molekulargewichten zwischen 150 und 10⁷, besonders bevorzugt zwischen 200 und 5·10⁴. Sie werden in der Regel durch Ringöffnungspolymerisation von Epoxiden in Gegenwart entsprechender aktive Wasserstoffatome aufweisende Starterverbindungen unter basischer, saurer oder koordinativer Katalyse (z.B. DMC-Katalyse) erhalten. Geeignete Polyetherpolyole sind z.B. Poly(oxypropylen)polyole, Poly(oxyethylen)polyole, EO-getippte Poly(oxypropylen)polyole, gemischte EO/PO-Polyole, Butylenoxid-Polymere, Butylenoxidcopolymere mit Ethylenoxid und/oder Propylenoxid und Poly(oxytetramethylen)glykole.

Für die Herstellung der erfindungsgemäßen Katalysatoren geeignete komplexbildende Komponenten d) sind Verbindungen aus der Klasse der Gallensäuren, Gallensäuresalze, Gallensäureester und Gallensäureamide.

Geeignete Gallensäuren für Komponente d) sind C₂₄-Steroid-Carbonsäuren, die Abbauprodukte des Cholesterins sind, und die sich im allgemeinen von der 5β-Cholan-24-säure durch Einführung α-ständiger Hydroxy-Gruppen an C-3, C-6, C-7 und C-12 ableiten.

Bevorzugte Gallensäuren besitzen die allgemeine Formel 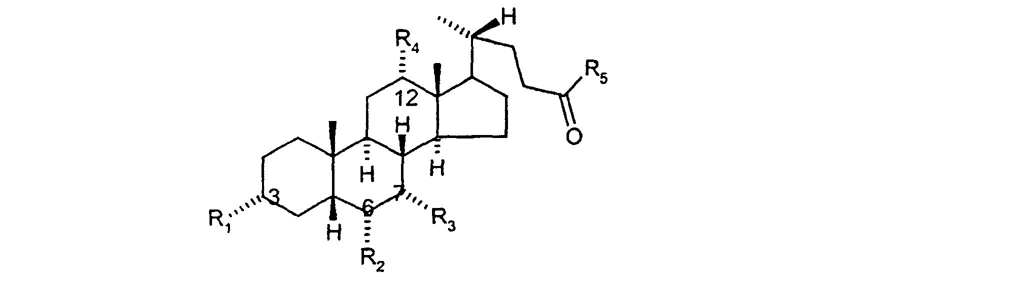 wobei R₁, R₂, R₃ und R₄ unabhängig voneinander H oder OH und R₅ OH, NH-CH₂-COOH, NH-CH₂-CH₂-SO₃H, NH-(CH₂)₃-N⁺(CH₃)₂-CH₂-CHOH-CH₂-SO₃⁻ oder NH-(CH₂)₃-N⁺(CH₃)₂-(CH₂)₃-SO₃⁻ bedeuten.

Geeignet sind die freien Säuren oder deren Salze, bevorzugt Alkali- oder Erdalkalimetallsalze, sowie deren Ester, bevorzugt mit Alkylresten mit 1 bis 30 C-Atomen, und deren Amide, bevorzugt mit Alkylresten oder Sulfoalkylresten, Sulfoalkylaminoalkylresten, Sulfohydroxyalkylaminoalkylresten und Carboxyalkylresten in der Säure- oder Salzform.

Beispiele geeigneter Gallensäuren oder deren Salze, Ester oder Amide sind Cholsäure (3α,7α,12α-Trihydroxy-5β-cholan-24-säure; R₁ = R₃ = R₄ = R₅ = OH, R₂ = H), Cholsäurenatriumsalz (Natriumcholat), Lithiumcholat, Kaliumcholat, Glykolcholsäure (3α,7α,12α-Trihydroxy-5β-cholan-24-säure-N-[carboxymethyl]amid; R₁ = R₃ = R₄ = OH, R₂ = H, R₅ = NH-CH₂-COOH), Natriumglykocholat, Taurocholsäure (3α,7α,12α-Trihydroxy-5β-cholan-24-säure-N-[2-sulfoethyl]amid; R₁ = R₃ = R₄ = OH, R₂ = H, R₅ = NH-CH₂-CH₂-SO₃H), Natriumtaurocholat, Desoxycholsäure (3α,12α-Dihydroxy-5β-cholan-24-säure; R₁ = R₄ = R₅ = OH, R₂ = R₃ = H), Natriumdesoxycholat, Kaliumdesoxycholat, Lithiumdesoxycholat, Glykodesoxycholsäure (3α,12α-Dihydroxy-5β-cholan-24-säure-N-[carboxymethyl]amid; R₁ = R₄ = OH, R₂ = R₃ = H, R₅ = NH-CH₂-COOH), Natriumglykodesoxycholat, Taurodesoxycholsäure (3α,12α-Dihydroxy-5β-cholan-24-säure-N-[2-sulfoethyl]amid; R₁ = R₄ = OH, R₂ = R₃ = H, R₅ = NH-CH₂-CH₂-SO₃H), Natriumtaurodesoxycholat, Chenodesoxycholsäure (3α,7α-Dihydroxy-5β-cholan-24-säure; R₁ = R₃ = R₅ = OH, R₂ = R₄ = H), Natriumchenodesoxycholat, Glykochenodesoxycholsäure (3α,7α-Dihydroxy-5β-cholan-24-säure-N-[carboxymethyl]amid; R₁ = R₃ = OH, R₂ = R₄ = H, R₅ = NH-CH₂-COOH), Natriumglykochenodesoxycholat, Taurochenodesoxycholsäure (3α,7α-Dihydroxy-5β-cholan-24-säure-N-[2-sulfoethyl]amid; R₁ = R₃ = OH, R₂ = R₄ = H, R₅ = NH-CH₂-CH₂-SO₃H), Natriumtaurochenodesoxycholat, Lithocholsäure (3α-Hydroxy-5β-cholan-24-säure; R₁ = R₅ = OH, R₂ = R₃ = R₄ = H), Natriumlithocholat, Kaliumlithocholat, Hyocholsäure (3α,6α,7α-Trihydroxy-5β-cholan-24-säure; R₁ = R₂ = R₃ = R₅ = OH, R₄ = H), Natriumhyocholat, Lithiumhyocholat, Kaliumhyocholat, Hyodesoxycholsäure (3α,6α-Dihydroxy-5β-cholan-24-säure; R₁ = R₂ = R₅ = OH; R₃ = R₄ = H), Natriumhyodesoxycholat, Lithiumhyodesoxycholat, Kaliumhyodesoxycholat, Cholsäuremethylester, Cholsäureethylester, Desoxycholsäureethylester und Hyocholsäuremethylester.

Besonders bevorzugt eingesetzt werden die Natrium-, Lithium- oder Kaliumsalze oder die Methyl- oder Ethylester der Cholsäure, Glykocholsäure, Taurocholsäure, Desoxycholsäure, Glykodesoxycholsäure, Taurodesoxycholsäure, Chenodesoxycholsäure, Glykochenodesoxycholsäure, Taurochenodesoxycholsäure, Lithocholsäure, Hyocholsäure, Hyodesoxycholsäure oder deren Gemische.

Weiter geeignet sind Gallensäuren wie Ursocholsäure (3α, 7β, 12α-Trihydroxy-5β-cholan-24-säure), Ursodesoxycholsäure (3α,7β-Dihydroxy-5β-cholan-24-säure), 7-Oxo-lithocholsäure (3α-Hydroxy-7-oxo-5β-cholan-24-säure), Lithocholsäure-3-sulfat (3α-Hydroxy-5β-cholan-24-säure-3-sulfat), nor-Cholsäure und bisnor-Cholsäure, oder deren Salze, Ester oder Amide.

Die Gallensäuren und deren Salze, Ester oder Amide sind allgemein gut bekannt und z.B. ausführlich beschrieben in Nachr. Chem. Tech. Lab. 43 (1995) 1047, Setchell et al.: "The Bile Acids", Bd. 4, Plenum, New York 1998 und "Römpp, Lexikon Naturstoffe", Stuttgart, New York 1997, S. 248ff.

Die erfindungsgemäßen Katalysatoren können kristallin, teilkristallin oder amorph sein. Die Analyse der Kristallinität erfolgt üblicherweise durch Pulverröntgendiffraktometrie.

Die Analyse der Katalysatorzusammensetzung erfolgt üblicherweise mittels Elementaranalyse, Thermogravimetrie oder extraktiver Entfernung der komplexbildenden Komponenten mit anschließender gravimetrischer Bestimmung.

Bevorzugt sind besonders erfindungsgemäße Katalysatoren enthaltend
a) Zinkhexacyanocobaltat (III),
b) tert.-Butanol,
c) einen oder mehrere komplexbildende Polyether polyole mit -OH Funktionalitäten von 1 bis 8, und
d) eine oder mehrere komplexbildende Komponente(n) aus der Gruppe der Gallensäuren, Gallensäuresalze, Gallensäureester und Gallensäureamide.

Die Herstellung der erfindungsgemäßen DMC-Katalysatoren erfolgt üblicherweise in wässriger Lösung durch Umsetzung von Metallsalzen, insbesondere der Formel (I), mit Metallcyanidsalzen, insbesondere der Formel (II), in Gegenwart von organischen Komplexliganden b), die weder Polyether noch Gallensäuren, Gallensäuresalze, Gallensäureester oder Gallensäureamide sind und den komplexbildenden Komponenten c) und d).

Bevorzugt werden dabei zunächst die wässrigen Lösungen des Metallsalzes (z.B. Zinkchlorid, eingesetzt im stöchiometrischen Überschuss (mindestens 50 Mol-% bezogen auf das Metallcyanidsalz)) und des Metallcyanidsalzes (z.B. Kaliumhexacyanocobaltat) in Gegenwart des organischen Komplexliganden b) (z.B. tert.-Butanol) umgesetzt, wobei sich eine Suspension bildet, die die Doppelmetallcyanid-Verbindung a) (z.B. Zinkhexacyanocobaltat), Wasser e), überschüssiges Metallsalz f), und den organischen Komplexliganden b) enthält.

Der organische Komplexligand b) kann dabei in der wässrigen Lösung des Metallsalzes und/oder des Metallcyanidsalzes vorhanden sein, oder er wird der nach Ausfällung der Doppelmetallcyanid-Verbindung a) erhaltenen Suspension unmittelbar zugegeben. Es hat sich als vorteilhaft erwiesen, die wässrigen Lösungen und den organischen Komplexliganden b) unter starkem Rühren zu vermischen. Die gebildete Suspension wird üblicherweise anschließend mit einer Mischung aus den komplexbildenden Komponenten c) und d) behandelt. Die Mischung aus den komplexbildenden Komponenten c) und d) wird dabei bevorzugt in einer Mischung mit Wasser und organischem Komplexliganden b) eingesetzt.

Anschließend erfolgt die Isolierung des Katalysators aus der Suspension durch bekannte Techniken, wie Zentrifugation oder Filtration. In einer bevorzugten Ausführungsvariante wird der isolierte Katalysator anschließend mit einer wässrigen Lösung des organischen Komplexliganden b) gewaschen (z.B. durch Resuspendieren und anschließende erneute Isolierung durch Filtration oder Zentrifugation). Auf diese Weise können zum Beispiel wasserlösliche Nebenprodukte, wie Kaliumchlorid, aus dem erfindungsgemäßen Katalysator entfernt werden.

Bevorzugt liegt die Menge des organischen Komplexliganden b) in der wässrigen Waschlösung zwischen 40 und 80 Gew.-%, bezogen auf die Gesamtlösung. Weiterhin ist es vorteilhaft, der wässrigen Waschlösung eine kleine Menge der Mischung aus den komplexbildenden Komponenten c) und d) zuzufügen, bevorzugt 0,5 bis 5 Gew.-%, bezogen auf die Gesamtlösung.

Außerdem ist es vorteilhaft, den Katalysator mehr als einmal zu waschen. Hierzu kann z.B. der erste Waschvorgang wiederholt werden. Bevorzugt ist es aber, für weitere Waschvorgänge nichtwässrige Lösungen zu verwenden, z.B. eine Mischung aus organischem Komplexliganden und der Mischung aus den komplexbildenden Komponenten c) und d).

Der gewaschene Katalysator wird anschließend, gegebenenfalls nach Pulverisierung, bei Temperaturen von im allgemeinen 20 - 100°C und bei Drücken von im allgemeinen 0,1 mbar bis Normaldruck (1013 mbar) getrocknet.

Ein weiterer Gegenstand der vorliegenden Erfindung ist die Verwendung der erfindungsgemäßen DMC-Katalysatoren in einem Verfahren zur Herstellung von Polyetherpolyolen durch Polyaddition von Alkylenoxiden an aktive Wasserstoffatome aufweisende Starterverbindungen.

Als Alkylenoxide kommen bevorzugt Ethylenoxid, Propylenoxid, Butylenoxid sowie deren Mischungen zum Einsatz. Der Aufbau der Polyetherketten durch Alkoxylierung kann z.B. nur mit einem monomeren Epoxid durchgeführt werden oder auch statistisch oder blockweise mit 2 oder 3 unterschiedlichen monomeren Epoxiden erfolgen. Näheres ist "Ullmanns Encyclopädie der industriellen Chemie", Band A21, 1992, S. 670f zu entnehmen.

Als aktive Wasserstoffatome aufweisende Starterverbindungen werden vorzugsweise Verbindungen mit (zahlenmittleren) Molekulargewichten von 18 bis 2 000 und 1 bis 8 Hydroxylgruppen eingesetzt. Beispielsweise werden genannt: Ethylenglykol, Diethylenglykol, Triethylenglykol, 1,2-Propylenglykol, 1,4-Butandiol, Hexamethylenglykol, Bisphenol A, Trimethylolpropan, Glycerin, Pentaerythrit, Sorbit, Rohrzucker, abgebaute Stärke oder Wasser.

Vorteilhafterweise werden solche aktive Wasserstoffatome aufweisende Starterverbindungen eingesetzt, die z.B. durch konventionelle Alkalikatalyse aus den zuvor genannten niedermolekularen Startern hergestellt wurden und oligomere Alkoxylierungsprodukte darstellen mit (zahlenmittleren) Molekulargewichten von 200 bis 2 000.

Die durch die erfindungsgemäßen Katalysatoren katalysierte Polyaddition von Alkylenoxiden an aktive Wasserstoffatome aufweisende Starterverbindungen erfolgt im allgemeinen bei Temperaturen von 20 bis 200°C, bevorzugt im Bereich von 40 bis 180°C, besonders bevorzugt bei Temperaturen von 50 bis 150°C. Die Reaktion kann bei Gesamtdrücken von 0,0001 bis 20 bar durchgeführt werden. Die Polyaddition kann in Substanz oder einem inerten, organischen Lösungsmittel, wie Toluol und/oder THF, durchgeführt werden. Die Menge an Lösungsmittel beträgt üblicherweise 10 bis 30 Gew.-%, bezogen auf die Menge des herzustellenden Polyetherpolyols.

Die Katalysatorkonzentration wird so gewählt, dass unter den gegebenen Reaktionsbedingungen eine gute Beherrschung der Polyadditionsreaktion möglich ist. Die Katalysatorkonzentration liegt im allgemeinen im Bereich von 0,0005 Gew.-% bis 1 Gew.-%, bevorzugt im Bereich von 0,001 Gew.-% bis 0,1 Gew.-%, besonders bevorzugt im Bereich von 0,001 bis 0,0025 Gew.-%, bezogen auf die Menge des herzustellenden Polyetherpolyols.

Die (zahlenmittleren) Molekulargewichte der nach dem erfindungsgemäßen Verfahren hergestellten Polyetherpolyole liegen im Bereich von 500 bis 100.000 g/mol, bevorzugt im Bereich von 1 000 bis 50 000 g/mol, besonders bevorzugt im Bereich von 2 000 bis 20 000 g/mol.

Die Polyaddition kann kontinuierlich oder diskontinuierlich, z.B. in einem Batch- oder im Semibatchverfahren durchgeführt werden.

Die erfindungsgemäßen Katalysatoren können wegen ihrer deutlich erhöhten Aktivität in sehr niedrigen Konzentrationen eingesetzt werden (25 ppm und weniger, bezogen auf die Menge des herzustellenden Polyetherpolyols). Werden die in Gegenwart der erfindungsgemäßen Katalysatoren hergestellten Polyetherpolyole zur Herstellung von Polyurethanen verwendet (Kunststoffhandbuch, Bd. 7, Polyurethane, 3. Aufl. 1993, S. 25-32 und 57-67), kann auf eine Entfernung des Katalysators aus dem Polyetherpolyol verzichtet werden, ohne dass die Produktqualitäten des erhaltenen Polyurethans nachteilig beeinflusst werden.

### Beispiele

### Katalysatorpräparation

### Beispiel A

### Herstellung eines DMC-Katalysators mit einem Polyether und einem Gallensäure-Salz (Katalysator A).

Zu einer Lösung aus 4 g (12 mmol) Kaliumhexacyanocobaltat in 70 ml destilliertem Wasser wurde unter starkem Rühren (24000 U/min) eine Lösung aus 12,5 g (91,5 mmol) Zinkchlorid in 20 ml destilliertem Wasser gegeben. Unmittelbar danach wurde eine Mischung aus 50 g tert.-Butanol und 50 g destilliertem Wasser zur gebildeten Suspension gegeben und anschließend 10 min stark gerührt (24 000 U/min). Dann wurde eine Mischung aus 0,5 g eines Polypropylenglykols mit einem zahlenmittleren Molekulargewicht von 2000 (,Polypropylenglykol 2000') und 0,5 g Cholsäure Natriumsalz, 1 g tert.-Butanol und 100 g destilliertem Wasser zugegeben und 3 min gerührt (1 000 U/min). Der Feststoff wurde durch eine Filtration isoliert, dann 10 min mit einer Mischung aus 70 g tert.-Butanol, 30 g destilliertem Wasser, 0,5 g Polypropylenglykol 2000 und 0,5 g Cholsäure Natriumsalz gerührt (10 000 U/min) und erneut filtriert. Abschließend wurde noch einmal 10 min mit einer Mischung aus 100 g tert.-Butanol, 0,25 g Polypropylenglykol 2000 und 0,25 g Cholsäure Natriumsalz gerührt (10 000 U/min). Nach Filtration wurde der Katalysator bei 50°C und Normaldruck bis zur Gewichtskonstanz getrocknet.

Ausbeute an getrocknetem, pulverförmigem Katalysator: 4,8 g

Elementaranalyse, Thermogravimetrische Analyse und Extraktion:
Cobalt = 11,9 Gew.-%, Zink = 25,3 Gew.-%, tert.-Butanol = 7,8 Gew.-%, Polypropylenglykol 2000 = 22,7 Gew.-%, Cholsäure Natriumsalz = 3,2 Gew.-%

### Beispiel B (Vergleich)

### Herstellung eines DMC-Katalysators mit einem Polyether ohne ein Gallensäure-Salz (Katalysator B)

Zu einer Lösung aus 4 g (12 mmol) Kaliumhexacyanocobaltat in 70 ml destilliertem Wasser wurde unter starkem Rühren (24 000 U/min) eine Lösung aus 12,5 g (91,5 mmol) Zinkchlorid in 20 ml destilliertem Wasser gegeben. Unmittelbar danach wurde eine Mischung aus 50 g tert.-Butanol und 50 g destilliertem Wasser zur gebildeten Suspension gegeben und anschließend 10 min stark gerührt (24 000 U/min). Dann wurde eine Mischung aus 1 g Polypropylenglykol 2000, 1 g tert.-Butanol und 100 g destilliertem Wasser zugegeben und 3 min gerührt (1 000 U/min). Der Feststoff wurde durch eine Filtration isoliert, dann 10 min mit einer Mischung aus 70 g tert.-Butanol, 30 g destilliertem Wasser und 1 g Polypropylenglykol 2000 gerührt (10 000 U/min) und erneut filtriert. Abschließend wurde noch einmal 10 min mit einer Mischung aus 100 g tert.-Butanol und 0,5 g Polypropylenglykol 2000 gerührt (10 000 U/min). Nach Filtration wurde der Katalysator bei 50°C und Normaldruck bis zur Gewichtskonstanz getrocknet.

Ausbeute an getrocknetem, pulverförmigem Katalysator: 6,2 g

Elementaranalyse,Thermogravimetrische Analyse und Extraktion:
Cobalt = 11,6 Gew.-%, Zink = 24,6 Gew.-%, tert.-Butanol = 3,0 Gew.-%, Polypropylenglykol 2000 = 25,8 Gew.-%.

### Beispiel C (Vergleich)

### Herstellung eines DMC-Katalysators mit einem Gallensäure-Salz ohne einen Polyether (Katalysator C)

Es wurde verfahren wie in Beispiel B (Vergleich), jedoch wurde Cholsäure-Natriumsalz anstelle des Polyethers aus Beispiel B eingesetzt.

Ausbeute an getrocknetem, pulverförmigem Katalysator: 4,2 g

Elementaranalyse, Thermogravimetrische Analyse und Extraktion:
Cobalt = 12,6 Gew.-%, Zink = 27,3 Gew.-%, tert.-Butanol = 10,9 Gew.-%, Cholsäure-Natriumsalz = 4,3 Gew.-%

### Herstellung von Polyetherpolyolen

### Allgemeine Durchführung

In einem 500 ml Druckreaktor wurden 50 g Polypropylenglykol-Starter (zahlenmittleres Molekulargewicht = 1 000 g/mol) und 5 mg Katalysator (25 ppm, bezogen auf die Menge des herzustellenden Polyetherpolyols) unter Schutzgas (Argon) vorgelegt und unter Rühren auf 105°C aufgeheizt. Anschließend wurde Propylenoxid (ca. 5 g) auf einmal zudosiert, bis der Gesamtdruck auf 2,5 bar angestiegen war. Weiteres Propylenoxid wurde erst dann wieder zudosiert, wenn ein beschleunigter Druckabfall im Reaktor beobachtet wurde. Dieser beschleunigte Druckabfall zeigt an, dass der Katalysator aktiviert ist. Anschließend wurde das restliche Propylenoxid (145 g) kontinuierlich bei einem konstanten Gesamtdruck von 2,5 bar zudosiert. Nach vollständiger Propylenoxid-Dosierung und 2 Stunden Nachreaktionszeit bei 105°C wurden flüchtige Anteile bei 90°C (1 mbar) abdestilliert und anschließend wurde auf Raumtemperatur abgekühlt.

Die erhaltenen Polyetherpolyole wurden durch Ermittlung der OH-Zahlen, der Doppelbindungsgehalte und der Viskositäten charakterisiert.

Der Reaktionsverlauf wurde anhand von Zeit-Umsatz-Kurven (Propylenoxid-Verbrauch [g] vs. Reaktionszeit [min]) verfolgt. Aus dem Schnittpunkt der Tangente an den steilsten Punkt der Zeit-Umsatz-Kurve mit der verlängerten Basislinie der Kurve wurde die Induktionszeit bestimmt. Die für die Katalysatoraktivität maßgeblichen Propoxylierungszeiten entsprechen dem Zeitraum zwischen Katalysatoraktivierung (Ende der Induktionsperiode) und dem Ende der Propylenoxid-Dosierung. Die Gesamtreaktionszeit ist die Summe aus Induktions- und Propoxylierungszeit.

### Beispiel 1

Herstellung von Polyetherpolyol mit Katalysator A (25 ppm)

| | |
|---|---|
| Induktionszeit | 135 min |
| Propoxylierungszeit | 19 min |
| Gesamtreaktionszeit | 154 min |
| Polyetherpolyol: OH-Zahl (mg KOH/g) | 29,8 |
| Doppelbindungsgehalt (mMol/kg) | 7 |
| Viskosität 25°C (mPas) | 843 |

### Beispiel 2 (Vergleich)

Herstellung von Polyetherpolyol mit Katalysator B (25 ppm)

| | |
|---|---|
| Induktionszeit | 100 min |
| Propoxylierungszeit | 110 min |
| Gesamtreaktionszeit | 210 min |
| Polyetherpolyol: OH-Zahl (mg KOH/g) | 28,1 |
| Doppelbindungsgehalt (mMol/kg) | 7 |
| Viskosität 25°C (mPas) | 849 |

### Beispiel 3 (Vergleich)

Herstellung von Polyetherpolyol mit Katalysator C (25 ppm)

| | |
|---|---|
| Induktionszeit | 217 min |
| Propoxylierungszeit | 33 min |
| Gesamtreaktionszeit | 250 min |
| Polyetherpolyol: OH-Zahl (mg KOH/g) | 29,6 |
| Doppelbindungsgehalt (mMol/kg) | 6 |
| Viskosität 25°C (mPas) | 855 |

Katalysator A, der sowohl Polypropylenglykol 2000 als auch Cholsäure-Natriumsalz als komplexbildende Komponenten enthält, besitzt eine wesentlich höhere Aktivität als die Katalysatoren B und C, die nur Polypropylenglykol 2000 bzw. Cholsäure Natriumsalz als komplexbildende Komponente enthalten.

## Patentansprüche

1. Doppelmetallcyanid (DMC)-Katalysator enthaltend
a) eine oder mehrere Doppelmetallcyanid-Verbindungen,
b) einen oder mehrere organische Komplexliganden, der (die) weder Polyether noch Gallensäuren, Gallensäuresalze, Gallensäureester oder Gallensäureamide sind,
c) eine oder mehrere komplexbildende Komponenten aus der Verbindungsklasse der Polyetherpolyole mit OH Funktionalitäten von 1 bis 8, und
d) eine oder mehrere komplexbildende Komponenten aus der Verbindungsklasse der Gallensäuren, Gallensäuresalze, Gallensäureester oder Gallensäureamide.

2. DMC-Katalysator nach Anspruch 1, zusätzlich enthaltend e) Wasser und/oder f) wasserlösliches Metallsalz.

3. DMC-Katalysator nach Anspruch 1, worin die Doppelmetallcyanid-Verbindung a) Zinkhexacyanocobaltat(III) ist.

4. DMC-Katalysator nach einem der Ansprüche 1 bis 3, worin der organische Komplexligand b) tert.-Butanol ist.

5. DMC-Katalysator nach einem der Ansprüche 1 bis 4, worin der Katalysator 1 bis 80 Gew.-% einer Mischung der komplexbildenden Komponenten c) und d) enthält.

6. Verfahren zur Herstellung eines DMC-Katalysators, enthaltend die Schritte
i) Umsetzung in wässriger Lösung von
α) Metallsalzen mit Metallcyanidsalzen,
β) organischen Komplexliganden, die weder Polyether noch Gallensäuren oder deren Salze, Ester oder Amide sind,
γ) einer oder mehreren komplexbildenden Komponente(n) aus der Verbindungsklasse der Polyether,
δ) einer oder mehreren komplexbildenden Komponente(n) aus der Verbindungsklasse der Gallensäuren, Gallensäuresalze, Gallensäureester oder Gallensäureamide,
ii) Isolieren, Waschen und Trocknen des in Schritt i) erhaltenen Katalysators.

7. Verfahren zur Herstellung von Polyetherpolyolen durch Polyaddition von Alkylenoxiden an aktive Wasserstoffatome aufweisende Starterverbindungen, in Gegenwart eines oder mehrerer DMC-Katalysatoren nach einem der Ansprüche 1 bis 5.

8. Verwendung eines oder mehrerer DMC-Katalysatoren nach einem der Ansprüche 1 bis 5, zur Herstellung von Polyetherpolyolen durch Polyaddition von Alkylenoxiden an aktive Wasserstoffatome aufweisende Starterverbindungen.

## Claims

1. Double metal cyanide (DMC) catalyst comprising
a) one or more double metal cyanide compounds,
b) one or more organic complexing ligands which is (are) neither polyethers nor bile acids, bile acid salts, bile acid esters or bile acid amides, and
c) one or more complexing components from the compound class of polyether-polyols with OH functionalities of 1 to 8, and
d) one or more complexing components from the compound class of bile acids, bile acid salts, bile acid esters or bile acid amides.

2. DMC catalyst according to claim 1, additionally comprising e) water and/or f) a water-soluble metal salt.

3. DMC catalyst according to claim 1, wherein the double metal cyanide compound a) is zinc hexacyanocobaltate(III).

4. DMC catalyst according to one of claims 1 to 3, wherein the organic complexing ligand b) is tert-butanol.

5. DMC catalyst according to one of claims 1 to 4, wherein the catalyst comprises 1 to 80 wt.% of a mixture of complexing components c) and d).

6. Process for the preparation of a DMC catalyst, comprising the steps
i) reaction in aqueous solution of
α) metal salts with metal cyanide salts,
β) organic complexing ligands which are neither polyethers nor bile acids or salts, esters or amides thereof,
γ) one or more complexing component(s) from the compound class of polyethers
δ) one or more complexing component(s) from the compound class of bile acids, bile acid salts, bile acid esters or bile acid amides,
ii) isolation, washing and drying of the catalyst obtained in step i).

7. Process for the preparation of polyether-polyols by polyaddition of alkylene oxides on to starter compounds containing active hydrogen atoms in the presence of one or more DMC catalysts according to one of claims 1 to 5.

8. Use of one or more DMC catalysts according to one of claims 1 to 5 for the preparation of polyether-polyols by polyaddition of alkylene oxides on to starter compounds containing active hydrogen atoms.

## Revendications

1. Catalyseur à base de cyanure métallique double (DMC), contenant :
a) un ou plusieurs composés de cyanure métallique double,
b) un ou plusieurs complexes de ligands organiques, qui ne sont ni des polyéthers, ni des acides galliques, sels d'acides galliques, esters d'acides galliques ou amides d'acides galliques,
c) un ou plusieurs composants complexants de la catégorie des composés polyétherpolyols avec des fonctionnalités OH de 1 à 8, et
d) un ou plusieurs composants complexants de la catégorie des composés acides galliques, sels d'acides galliques, esters d'acides galliques ou amides d'acides galliques.

2. Catalyseur DMC selon la revendication 1, contenant en plus e) de l'eau et/ou f) un sel métallique hydrosoluble.

3. Catalyseur DMC selon la revendication 1, dans lequel le composé de cyanure métallique double a) est l'hexacyanocobaltate de zinc (III).

4. Catalyseur DMC selon l'une des revendications 1 à 3, dans lequel le complexe de ligand organique b) est le tert.-butanoi.

5. Catalyseur DMC selon l'une des revendications 1 à 4, dans lequel le catalyseur contient 1 à 80 % en poids d'un mélange de composants complexants c) et d).

6. Procédé de préparation d'un catalyseur DMC, comprenant les étapes consistant à
i) faire réagir en solution aqueuse de
α) sels métalliques avec des sels de cyanure métallique,
β) complexes de ligands organiques, qui ne sont ni des polyéthers, ni des acides galliques ou leurs sels, esters ou amides,
γ) un ou plusieurs composants complexants de la catégorie des composés polyéthers,
δ) un ou plusieurs composants complexants de la catégorie des composés des acides galliques, sels d'acides galliques, esters d'acides galliques ou amides d'acides galliques,
ii) isoler, laver et sécher le catalyseur obtenu à l'étape i).

7. Procédé de préparation de polyétherpolyols par polyaddition d'oxydes d'alkylène à des composés de départ présentant des atomes d'hydrogène actifs, en présence d'un ou de plusieurs catalyseurs DMC selon l'une des revendications 1 à 5.

8. Utilisation d'un ou de plusieurs catalyseurs DMC selon l'une des revendications 1 à 5, pour la préparation de polyétherpolyols par polyaddition d'oxydes d'alkylène à des composés de départ présentant des atomes d'hydrogène actifs.
